# EUROPEAN PATENT APPLICATION

(11) **EP 2 514 719 A1**
(43) Date of publication of application: **24.10.2012**
(21) Application number: 10837550.2
(22) Date of filing: 13.12.2010
(51) Int. Cl.: C01C 1/04, B01J 23/42, B01J 23/46, C01B 7/01, C01B 7/09, C01B 7/19, C01C 1/16

(54) **PROCESS FOR SYNTHESIS OF AMMONIA**

(30) Priority: 14.12.2009 JP 2009282775
(71) Applicant: Nippon Shokubai Co., Ltd., Osaka-shi, Osaka 541-0043 (JP)
(72) Inventor: KAMEYAMA, Hideo, Fuchu-shi Tokyo 183-8538 (JP); MASUDA, Akiyuki, Fuchu-shi Tokyo 183-8538 (JP); FUKUI, Tomoaki, Fuchu-shi Tokyo 183-8538 (JP); TSUNEKI, Hideaki, Suita-shi Osaka 564-0034 (JP); MIYAZAKI, Kuninori, Himeji-shi Hyogo 671-1282 (JP)
(74) Representative: Copsey, Timothy Graham
(86) International application number: PCT/JP2010/072348
(87) International publication number: WO 2011/074524

(57) **Abstract**

To provide a sustainable method for the synthesis of ammonia from nitrogen by low resources and low energy.

The present invention is a method for the synthesis of ammonia by a thermochemical cycle, which uses nitrogen and water as raw materials and uses renewable energy as an energy source. Ammonia is synthesized without auxiliary raw materials by a step of obtaining ammonia by a reaction of nitrogen and a halogenated hydrogen by way of a halogenated ammonium as a cycle that proceeds in a thermodynamic manner, and a step of recycling the byproduced halogen.

## Description

### TECHNICAL FIELD

The present invention relates to a method for the synthesis of ammonia.

### BACKGROUND ART

It is well-known that the Haber-Bosch process was established for the synthesis of ammonia, and the process provided a raw material for fertilizers and served as a locomotive for not only the great development of chemical industries but also for the development of agriculture. In the Haber-Bosch process, ammonia is obtained by reacting hydrogen and nitrogen at 400 to 600°C under a high pressure condition of 20 to 40 MPa using a catalyst containing iron as a main component. As the industrial catalyst, a catalyst obtained by adding alumina and potassium oxide to iron to improve the catalytic performance of the iron is used (see Non-Patent Literature 1). As other technique, there is an example in which use of a Ru-based catalyst is suggested (see Patent Literature 1).

### Prior Art Literatures

### Patent Literatures

Patent Literature 1: JP-A-8-141399

### Non-Patent Literature

Non-Patent Literature 1: "Catalyst Handbook", edited by Catalyst Society of Japan, published by Kodansha, on December 10, 2008, pp. 536-539

### SUMMARY OF INVENTION

### Technical Problem

As the most recent problem, a technique for preventing resource depletion and global warming is required. The above-mentioned Haber-Bosch process uses so-called fossil resources as raw materials, and since the process is a process under a high temperature and a high pressure, it consumes a lot of energy, uses a large amount of resources and ejects a large amount of global warming gas in the production steps thereof. Instead of this technique, suggestion of a more sustainable technique by effectively utilizing limited resources on the globe is desired.

### Solution to Problem

The present inventors have done intensive studies to solve the above-mentioned problem and consequently found the following means, thereby completed the present invention.

The present invention is to provide a method for synthesizing ammonia, comprising: (A) a step of reacting nitrogen and a halogenated hydrogen to obtain a halogen and a halogenated ammonium (an ammonium ion formation step), and (B) a step of decomposing the halogenated ammonium obtained by the ammonium ion formation step into a halogenated hydrogen and ammonia (a decomposing step).

### Advantageous Effects of Invention

Since the present invention uses nitrogen and water as raw materials and uses a thermochemical cycle, it is possible to use renewable energy such as solar energy, and a high pressure is not required. Thus, the present invention is an advantageous means as compared to conventional techniques in terms of energy. Particularly, the present invention can finally use a recycling reaction step, and thus can provide a reaction step by which unnecessary resources and unnecessary energy are difficult to be generated.

### BRIEF DESCRIPTION OF THE DRAWINGS

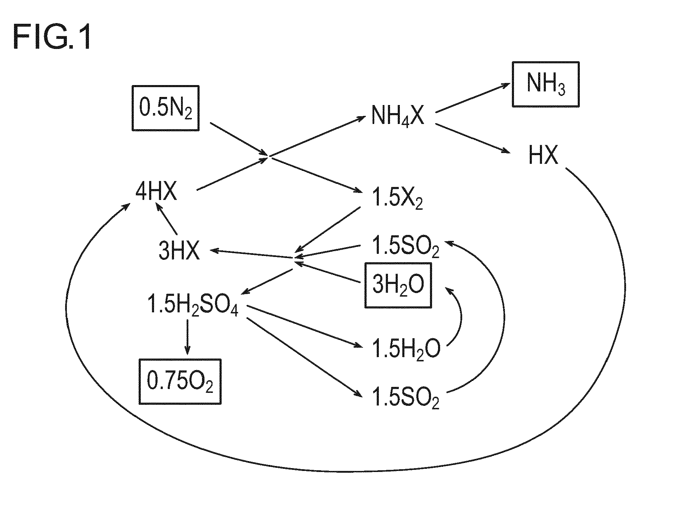

Fig. 1 shows a series of reaction concepts of the present invention.

### DESCRIPTION OF EMBODIMENTS

The first invention is a method for synthesizing ammonia, comprising: (A) a step of reacting nitrogen and a halogenated hydrogen to obtain a halogen and a halogenated ammonium (an ammonium ion formation step), and (B) a step of decomposing the halogenated ammonium obtained in the ammonium ion formation step into a halogenated hydrogen and ammonia (a decomposing step).

The second invention contains, following the first invention, (C) recycling the halogen byproduced during the synthesis of ammonia that is the first invention, into a halogenated hydrogen. Any method may be used as long as halogen is recycled into halogenated hydrogen, preferable methods may include the following methods.

### (C-1)

A step of recycling the halogen obtained in the ammonium ion formation step into a halogenated hydrogen by using hydrogen included in water (H₂O) (a halogenated hydrogen-recycling step) is conducted. The oxygen included in the water (H₂O) becomes an oxygen molecule.

This step is thermodynamically difficult to be conducted in one stage, depending on the kind of the halogen, and can be multiple stages of thermochemical cycles. Specifically, in the case when the halogen is chlorine, it is possible to conduct the step in one stage.

### (C-2)

In the case when the halogen is bromine or iodine, it is preferable to make other substance mediate. Specifically, a step of obtaining a halogenated hydrogen and sulfuric acid (H₂SO₄) is conducted by adding sulfur dioxide (SO₂) and water (H₂O) to the halogen.

In the case when other substance mediates in the step (C-2), a step of recycling the mediating substance can be used (D). Specifically, in the case when sulfur dioxide (SO₂) is used as the mediating substance, a step of decomposing the sulfuric acid obtained in the step (C-2) (the H₂SO₄ step) into oxygen (O₂), sulfur dioxide (SO₂) and water (H₂O) (an SO₂ step) is conducted.

In the third invention, as a recycling step relating to the first invention and second invention, the halogenated hydrogen obtained in the halogenated hydrogen-recycling step can be used as the halogenated hydrogen in the ammonium ion formation step (step (E)), and at least one of the sulfur dioxide (SO₂) and the water (H₂O) obtained in the SO₂ step can be used as the sulfur dioxide (SO₂) or water (H₂O) that serves as a raw material for the H₂SO₄ step (step (F)). By adopting these methods, the byproduced compounds other than the intended product can be used by recycling, which enables effective utilization of resources.

The third invention will be suitably explained in the explanation of the first invention and second invention.

Hereinafter each step will be specifically explained, but the steps are not limited to only the following description as long as it has the effect of the present invention (see Fig. 1 for the series of reaction concepts of the present invention).

The ammonium ion formation step (A) in the present invention is a reaction for the synthesis of a halogenated ammonium by a reaction between molecular nitrogen and a halogenated hydrogen. The step is a novel reaction that has not been known until now, and it is a completely novel idea that a thermochemical cycle is established by incorporating this reaction step.

Although the elementary reactions of the halogenated hydrogen-recycling step of the above-mentioned (C) and the mediating substance recycling step of the above-mentioned (D) are known as, for example, the IS process (see for example, "JAERI-Review", 94-006, edited and published by Japan Atomic Energy Research Institute, published on November 1994), the present invention is characterized in that the novel ammonium ion formation step of the above-mentioned (A) as a core reaction is connected to other steps for recycling reactants to complete a thermochemical cycle.

### (First invention)

The first invention is constituted by an ammonium ion formation step and a decomposition step. First, the ammonium ion formation step will be explained.

Although the nitrogen is preferably pure nitrogen, a nitrogen gas containing reaction-inert gas such as helium and argon, or water vapor can be used.

The halogenated hydrogen may also be any one as long as it contains hydrogen and a halogen, and hydrogen iodide is preferable.

The amounts of the nitrogen and the halogenated hydrogen are preferably 5 to 90% by volume, more preferably 10 to 80% by volume for the nitrogen, and preferably 10 to 95% by volume, more preferably 20 to 90% by volume for the halogenated hydrogen in the reaction gas in the ammonium ion formation step.

The reaction temperature is preferably 50 to 250°C, more preferably 100 to 200°C. The reaction pressure is preferably 0.05 to 2.0 MPa, more preferably 0.1 to 1.0 MPa.

The catalyst is not specifically limited, and a catalyst containing iron oxide as a main component and also containing aluminum oxide, potassium oxide, or metal-loaded catalyst is preferable. As a metal to be the catalyst, a transition metal or precious metal can be used, and platinum, ruthenium, rhodium, palladium, iridium and the like can be exemplified. These metals can be used alone or by combining two or more. As a carrier, alumina, titania, zirconia, active carbon and the like can be exemplified. Among these, catalysts obtained by loading a metal containing a precious metal on a carrier that is difficult to react with halogens are particularly preferable, and, Platinum-loaded alumina, and rhodium and ruthenium catalysts are exemplified.

The amount of the metal to be loaded is not specifically limited. The metal may be loaded by an amount effective for the production of halogenated ammonium. The amount is preferably from 1 to 30% by mass, more preferably from 2 to 20% by mass with respect to 100% by mass of the total mass of the catalyst for the production of halogenated ammonium.

After the halogen and halogenated ammonium obtained by the reaction are separated, the halogenated ammonium is preferably transferred to the decomposition step. The separation method is not specifically limited, and for example, a method such as thermal decomposition can be adopted.

Besides the nitrogen and halogenated hydrogen, water can also be added, and the addition amount of water is preferably 0 to 70% by volume, more preferably 0 to 60% by volume with respect to the entirety of the reaction gas.

Next, the decomposition step will be explained. The decomposition step is a step of decomposing the halogenated ammonium to obtain halogenated hydrogen and ammonia. In the step, 100% by volume of halogenated ammonium can be used as a reaction gas. Or inert gas such as argon or gas having weak oxidizing power such as nitrogen, hydrogen and water vapor can be added to the halogenated ammonium and used as the reaction gas.

The reaction temperature of the decomposition step is preferably 300 to 600°C, more preferably 400 to 550°C. The reaction pressure of the step is preferably 0.05 to 1.0 MPa, more preferably 0.1 to 0.5 MPa. It is known that halogenated hydrogens are decomposed by heating (for example, see "Encyclopedia of Chemistry", Vol. 1, pp. 1019-1020, Kyoritsu Shuppan Co., Ltd., published on June 1, 1993).

The ammonia can be separated from the ammonia and halogenated hydrogen obtained by the reaction of the decomposition step by a means such as adsorption on an acid-type zeolite. The separated halogenated hydrogen can be used as a raw material for other chemical industries, and can also be used as the raw material for the ammonium ion formation step (the step (E)). By recycling and using as a raw material, effective utilization of raw materials and a sustainable reaction can further be attained.

### (Second invention)

First, (C-1) will be explained, thereafter (C-2) will be explained.

### (C-1)

This step is a step of recycling the halogen obtained in the ammonium ion formation step by water (H₂O) into a halogenated hydrogen (halogenated hydrogen-recycling step) .

The step is a step containing converting the halogen byproduced by the first invention to a halogenated hydrogen by water (H₂O). The halogenated hydrogen can be used for other reactions, or can be used as a raw material for the first invention mentioned below (the step (E)). When the halogenated hydrogen is used as the raw material for the first invention, waste of raw materials is prevented in the steps of the present invention as a whole, thereby a recycling-type reaction step can be provided.

The contents of the respective compounds in the reaction gas in the step are as follows. The content of the halogen is preferably 30 to 60% by volume, more preferably 40 to 50% by volume in the reaction gas.

The content of the water is preferably 70 to 40% by volume, more preferably 60 to 50% by volume in the reaction gas. The total of the halogen and water is 100% by volume. Alternatively, the reaction gas may contain other gas as long as it does not inhibit the reaction. For example, sulfur dioxide (SO₂) can be added, and the content thereof is preferably 5 to 30% by volume, more preferably 15 to 20% by volume with respect to the total of the halogen, the sulfur dioxide (SO₂) and the water (H₂O) of 100% by volume.

The reaction temperature is preferably 10 to 80°C, more preferably 25 to 60°C. The reaction pressure is preferably 0.05 to 1.0 MPa, more preferably 0.1 to 0.2 MPa.

Catalyst is not specifically required.

### (C-2)

In the case when the halogen is bromine or iodine, it is preferable to conduct a step of adding sulfur dioxide (SO₂) and water (H₂O) to the halogen to obtain a halogenated hydrogen and sulfuric acid (H₂SO₄) (an H₂SO₄ step). The content of the halogen is preferably 10 to 50% by volume, more preferably 20 to 30% by volume in the reaction gas. The content of the sulfur dioxide (SO₂) is preferably 10 to 50% by volume, more preferably 20 to 40% by volume in the reaction gas. The content of the water (H₂O) is preferably 10 to 50% by volume, more preferably 20 to 40% by volume in the reaction gas. The total of the halogen, the sulfur dioxide (SO₂) and the water (H₂O) is 100% by volume.

Alternatively, the reaction gas may contain other gas such as argon and nitrogen as long as it does not inhibit the reaction. The content of the other gas is preferably 1 to 20% by volume, more preferably 5 to 10% by volume with respect to the total of the halogen, sulfur dioxide (SO₂) and water (H₂O).

The reaction temperature is preferably 10 to 80°C, more preferably 20 to 60°C. The reaction pressure is preferably 0.05 to 1.0 MPa.

Catalyst is not used.

Since the sulfuric acid (H₂SO₄) and halogenated hydrogen obtained by the reaction of the step are separated into two liquid phases, the halogenated hydrogen can be separated by separating the respective layers and thereafter using a means such as distillation.

### (Third invention)

The step of recycling the mediating substance in the case when other substance mediates in the step (C-2) will be explained. Specifically, in the case when sulfur dioxide (SO₂) is used as the mediating substance, a step of decomposing the sulfuric acid (H₂SO₄) obtained in the step (C-2) (the halogenatedhydrogen-recyclingstep) into oxygen (O₂), sulfur dioxide (SO₂) and water (an SO₂ step) is conducted (D). The obtained sulfur dioxide (SO₂) can be used as a raw material for other chemical industries, and can also be used as the raw material for the second invention (the step (F)). The water (H₂O) byproduced in the step (F) can also be used as the raw material. When used as the rawmaterials for the second invention, waste of the raw materials is prevented in the steps of the present invention as a whole, thereby a recycling-type reaction step can be provided. In the step (F), other product is oxygen (O₂), and a stable recycle reaction step is achieved by conducting the first to third inventions.

Although 100% by volume of sulfuric acid (H₂SO₄) can be used in the step (F), water can also be added and the addition amount thereof is preferably 5 to 20% by volume, morepreferably 5 to 10% by volume with respect to the sulfuric acid (H₂SO₄).

The reaction temperature is preferably 400 to 1, 000°C, more preferably 500 to 850°C. The reaction pressure is preferably 0.05 to 0.5 MPa, more preferably 0.1 to 0.2 MPa.

### Examples

Hereinafter the present invention will be explained in detail by Examples, but the present invention is not limited to the following Examples as long as it exerts the effect of the present invention.

### (Example 1)

### (Ammonium ion formation step)

Heating to 100°C to 200°C was conducted. Nitrogen gas was introduced in a glass reactor in which a catalyst was filled, and hydrogen iodide gas was fed thereto. The content of the nitrogen in the reaction gas was 60% by volume, and the content of the hydrogen iodide gas in the reaction gas was 40% by volume. The reaction pressure was 0.1 MPa. The generated ammonium iodide precipitated as a solid at the outlet of the reactor. By cooling the gas at the outlet of the reactor to a room temperature (25°C), iodine precipitated as a solid and can be collected.

### (Decomposition step)

The ammonium iodide obtained in the ammonium ion formation step was decomposed into ammonia and hydrogen iodide by heating to 520°C under a flow of inert gas. The reaction pressure at this time was 0.1 MPa. The obtained ammonia-containing gas was introduced in a column in which USY zeolite was filled to separate ammonia by adsorption.

### (H₂SO₄ step)

Water was introduced in a reactor equipped with a stirrer, and the iodine collected in the ammonium step was dispersed. A reaction was conducted by injecting SO₂ gas under stirring at a room temperature (25°C). The content of the iodine in the reaction liquid was 70% by mass. The reaction temperature was 80°C, and the reaction pressure was 0.1 MPa.

After the reaction was completed, the reaction liquid was stood still until it separate into two liquid layers, and an aqueous sulfuric acid solution was collected from the upper layer and an aqueous hydrogen iodide solution was collected from the lower layer, respectively.

### (SO₂ step)

The sulfuric acid (H₂SO₄) obtained in the H₂SO₄ step was dehydrated, sent to a reactor in which a catalyst heated to 500 to 800°C was filled , and subjected to thermal decomposition, and SO₂ was collected. The reaction pressure at this time is 0.1 MPa. As the catalyst, a catalyst carrying a precious metal such as platinum and palladium, or iron oxide was used.

### (Example 2)

An ammonium ion formation step was conducted according to the following procedures to synthesize ammonium iodide by a reaction of hydrogen iodide and nitrogen.

As a reactor, a glass autoclave having an inner volume of 100 mL (TEM-V100 manufactured by Taiatsu Techno Corporation) was used. A catalyst was placed in a stainless steel basket fixed on a thermometer protection tube in the reactor. As the catalyst, 1.25 g of a catalyst containing γ-alumina carrying 5% by mass of platinum/ruthenium (atomic ratio 1 : 2) was used. 57% by mass of 10 mL of an aqueous hydrogen iodide solution was introduced in the reactor with preventing the solution from contacting with the catalyst, the gas phase part was purged sufficiently with nitrogen, and vapor of hydrogen iodide was generated by heating the reactor to 150°C and reacted with nitrogen. The composition of the charged reaction gas was 21% by volume of nitrogen, 26% by volume of hydrogen iodide and 53% by volume of water vapor. After the temperature was raised, the reaction was conducted for 60 minutes. The pressure during the reaction was 0.7 MPa.

After the reaction was completed, 50 mL of an aqueous sodium hydroxide solution having a concentration of 2 mol/L was added thereto, the mixture was heated to 100°C, 1 L of nitrogen was introduced and the gas thereof was collected in a gas bag, and the ammonia released from the generated ammonium iodide was collected, and the generated amount was quantified.

The generated ammonia was 1.0×10⁻⁵ mol. The nitrogen in the reaction gas was 4×10⁻³ mol, and the hydrogen iodide in the reaction gas was 7.6×10⁻² mol. Since nitrogen and hydrogen iodide that were required for generating 1 mol of ammonia are 0.5 mol and 3 mol, respectively, the conversions of the nitrogen and the hydrogen iodide were 0.125% and 0.04%, respectively.

### (Example 3)

The reaction was conducted in a similar manner to that of Example 2, except that the catalyst used was changed to a catalyst containing γ-alumina carrying 5% by mass of ruthenium and the reaction temperature was 180°C. The amount of the catalyst used and the result are shown in Table 1.

### (Example 4)

The reaction was conducted in a similar manner to that of Example 3, except that the catalyst used was changed to a catalyst containing γ-alumina carrying 5% by mass of rhodium. The amount of the catalyst used and the results are shown in Table 1.

### (Example 5)

The reaction was conducted in a similar manner to that of Example 3, except that the catalyst used was changed to a catalyst containing γ-alumina carrying 5% by mass of rhodium/ruthenium (atomic ratio 2 : 1). The amount of the catalyst used and the results are shown in Table 1.

### (Example 6)

The reaction was conducted in a similar manner to that of Example 3, except that the catalyst used was changed to a catalyst containing γ-alumina carrying 5% by mass of palladium/ruthenium (atomic ratio 2 : 1). The amount of the catalyst used and the results are shown in Table 1.

### (Example 7)

The reaction was conducted in a similar manner to that of Example 3, except that the catalyst used was changed to a catalyst containingy-alumina carrying 5% by mass of platinum. The amount of the catalyst used and the results are shown in Table 1.

**[Table 1]**

| | Catalyst species (Carrier: γ-alumina) | Amount of catalyst used | Amount of generated NH₃ (×10⁻⁶ mol) | Conversion (mol%) | |
|---|---|---|---|---|---|
| | | | | N₂ | HI |
| Example 3 | Ru 5% by mass | 0.621 g | 29 | 0.36 | 0.116 |
| Example 4 | Rh 5% by mass | 0.499 g | 3.3 | 0.04 | 0.013 |
| Example 5 | Rh/Ru (atomic ratio 2/1) 5% by mass | 0.516 g | 3.4 | 0.04 | 0.014 |
| Example 6 | Pd/Ru (atomic ratio 2/1) 5% by mass | 0.506 g | 16 | 0.19 | 0.061 |
| Example 7 | Pt 5% by mass | 0.505 g | 35 | 0.43 | 0.139 |

### Industrial Applicability

The present invention suggests a novel method for the synthesis of ammonia by which unnecessary resources and unnecessary energy are difficult to be generated, and ammonia can be used as a fundamental raw material for chemical industries or as a novel fuel. Furthermore, the byproduced halogenated hydrogen, sulfuric acid and the like can also be used as raw materials for chemical industries.

The present application is based on the Japanese Patent Application No. 2009-282775 filed on December 14, 2009, and the disclosure of which is herein incorporated by reference in its entirety.

## Claims

1. A method for synthesizing ammonia, comprising:
(A) a step of reacting nitrogen and a halogenated hydrogen to obtain a halogen and a halogenated ammonium (an ammonium ion formation step), and
(B) a step of decomposing the halogenated ammonium obtained by the ammonium ion formation step into a halogenated hydrogen and ammonia (a decomposing step).

2. The method for synthesizing ammonia according to Claim 1, further comprising:
(C) a step of recycling the halogen into a halogenated hydrogen.

3. The method for synthesizing ammonia according to Claim 2, wherein
the step of recycling into a halogenated hydrogen is (C-1) a step of adding water to the halogen obtained in the ammonium ion formation step to obtain a halogenated hydrogen (a halogenated hydrogen-recycling step).

4. The method for synthesizing ammonia according to Claim 2, wherein
the step of recycling into a halogenated hydrogen is (C-2) a step of adding sulfur dioxide and water to the halogen obtained in the ammonium ion formation step to obtain a halogenated hydrogen and sulfuric acid (an H₂SO₄ step).

5. The method for synthesizing ammonia according to Claim 4, further comprising:
(D) a step of decomposing the sulfuric acid obtained in the H₂SO₄ step into oxygen, sulfur dioxide and water (an SO₂ step), following the H₂SO₄ step.

6. The method for synthesizing ammonia according to Claim 3, wherein
the halogenated hydrogen obtained in the halogenated hydrogen-recycling step is used as the halogenated hydrogen in the ammonium ion formation step.

7. The method for synthesizing ammonia according to Claim 5, wherein
at least one of the sulfur dioxide and the water obtained in the SO₂ step is used in the H₂SO₄ step.

8. The method for synthesizing ammonia according to any one of Claims 1 to 7, wherein
the halogen is iodine.

9. The method for synthesizing ammonia according to any one of Claims 1 to 8, wherein
a catalyst used in the ammonium ion formation step is a metal-loaded catalyst.
